# EUROPÄISCHE PATENTSCHRIFT

(11) **EP 2 691 621 B1**
(45) Veröffentlichungstag und Bekanntmachung des Hinweises auf die Patenterteilung: **14.10.2015**
(21) Anmeldenummer: 12711847.9
(22) Anmeldetag: 26.03.2012
(51) Int. Cl.: F01N 13/00, F01N 3/035, F01N 3/10, F01N 9/00, F01N 3/025

(54) **VERFAHREN ZUM ZUFÜHREN VON THERMISCHER ENERGIE IN EIN IN DEN ABGASSTRANG EINER BRENNKRAFTMASCHINE EINGESCHALTETES ABGASREINIGUNGSAGGREGAT**
METHOD FOR SUPPLYING THERMAL ENERGY TO AN EXHAUST PURIFICATION DEVICE ARRANGED INSIDE OF AN EXHAUST LINE OF AN INTERNAL COMBUSTION ENGINE
PROCÉDÉ POUR FOURNIR DE L'ENERGIE THERMIQUE À UN DISPOSITIF DE PURIFICATION DE GAZ D'ÉCHAPPEMENT ARRANGÉ DANS UN TUYAU D'ÉCHAPPEMENT D'UN MOTEUR À COMBUSTION INTERNE

(30) Priorität: 28.03.2011 DE 102011001596
(43) Veröffentlichungstag der Anmeldung: 05.02.2014
(73) Patentinhaber: HJS Emission Technology GmbH & Co. KG, 58706 Menden (DE)
(72) Erfinder: BAIER, Bettina, 44269 Dortmund (DE); MAURER, Bernd, 58802 Balve (DE); SCHREWE, Klaus, 59602 Rüthen (DE); NOACK, Frank, 58675 Hemer (DE)
(74) Vertreter: Haverkamp, Jens
(86) Internationale Anmeldenummer: PCT/EP2012/055296
(87) Internationale Veröffentlichungsnummer: WO 2012/130789

(56) Entgegenhaltungen:
- EP-A1- 2 305 978
- DE-A1-102006 033 929
- DE-U1-202009 005 251

## Beschreibung

Die Erfindung betrifft ein Verfahren zum Zuführen von thermischer Energie in ein in den Abgasstrang einer Brennkraftmaschine, insbesondere eines Dieselmotors, eingeschaltetes Abgasreinigungsaggregat durch Erwärmen des das Abgasreinigungsaggregat anströmenden Abgases auf eine SOLL-Temperatur, bei welchem Verfahren das von der Brennkraftmaschine ausgestoßene Abgas durch Konvertierung von in den Abgasstrom dosierten Kohlenwasserstoffen (HC) an zwei in Strömungsrichtung des Abgases hintereinander geschalteten Oxidationskatalysatoren auf die SOLL-Temperatur erwärmt wird, von denen der in Strömungsrichtung des Abgases der Brennkraftmaschine nähere, erste Oxidationskatalysator in einem Nebenstrang und der diesem nachgeschaltete, zweite Oxidationskatalysator im Abgasstrang nach der Vereinigung von Haupt- und Nebenstrang angeordnet sind, wobei in Abhängigkeit von der IST-Temperatur und der SOLL-Temperatur des das Abgasreinigungsaggregat anströmenden Abgases die HC-Dosierung zum Zuführen von Kohlenwasserstoffen in den Nebenstrang stromauf des ersten Oxidationskatalysators und/oder der den Nebenstrang durchströmende Abgasmassenstrom eingestellt werden.

Brennkraftmaschinen, derzeitig insbesondere Dieselmotoren, verfügen über in den Abgasstrang eingeschaltete Aggregate, um schädliche oder unerwünschte Emissionen zu reduzieren. Bei einem derartigen Aggregat kann es sich beispielsweise um einen Oxidationskatalysator, einen Partikelfilter und/oder um eine SCR-Stufe handeln. Ein Partikelfilter dient zum Auffangen von von der Brennkraftmaschine ausgestoßenen Rußpartikeln. Auf der anströmseitigen Oberfläche des Partikelfilters akkumuliert der im Abgas mitgeführte Ruß. Damit im Zuge der sukzessiven Rußakkumulation der Abgasgegendruck nicht zu weit ansteigt und/oder der Filter zu verstopfen droht, wird bei hinreichender Rußbeladung des Partikelfilters ein Regenerationsprozess ausgelöst. Bei einem solchen Regenerationsprozess wird der auf dem Filter akkumulierte Ruß abgebrannt (oxidiert). Nach Abschluss einer solchen Rußoxidation ist der Partikelfilter regeneriert. Zurück bleibt allein ein nicht-verbrennbarer Ascherest. Damit eine Rußoxidation stattfindet, muss der Ruß eine gewisse Temperatur aufweisen. Diese liegt in aller Regel bei etwa 600 Grad Celsius. Die Temperatur, bei der eine solche Rußoxidation beginnt, kann niedriger liegen, beispielsweise wenn die Oxidationstemperatur durch ein Additiv und/oder durch Bereitstellung von NO₂ herabgesetzt worden ist. Wenn der Ruß eine Temperatur aufweist, die unterhalb seiner Oxidationstemperatur liegt, ist es erforderlich, zum Auslösen des Regenerationsprozesses thermische Energie zuzuführen, um auf diese Weise aktiv eine Regeneration auslösen zu können. Eine aktive Regeneration kann über innermotorische Maßnahmen eingeleitet werden, indem der Verbrennungsprozess geändert wird, damit Abgas in einer höheren Temperatur ausgestoßen wird. Bei zahlreichen Anwendungen vor allem im Non-Road-Bereich, werden jedoch nachmotorische Maßnahmen zum Herbeiführen einer aktiven Regeneration bevorzugt. In vielen Fällen ist es im Rahmen einer Abgasreinigung nicht möglich, auf motorische Maßnahmen Einfluss zu nehmen.

Aus DE 20 2009 005 251 U1 ist eine Abgasreinigungsanlage bekannt, bei der für die Zwecke des aktiven Herbeiführens der Regeneration eines Partikelfilters der Abgasstrang in einen Hauptstrang und einen Nebenstrang geteilt ist. In den Nebenstrang ist ein katalytischer Brenner eingeschaltet, durch den der durch den Nebenstrang strömende Abgasteilstrom erwärmt und anschließend mit dem durch den Hauptstrang strömenden Abgasteilstrom vereinigt wird, so dass auf diese Weise der gemischte Abgasmassenstrom eine deutlich höhere Temperatur aufweist. Die Erhöhung der Temperatur des Abgasstromes dient dem Zweck, den auf der Anströmseite des Partikelfilters akkumulierten Ruß auf eine hinreichende Temperatur zum Auslösen des Regenerationsprozesses zu erwärmen. Als katalytischer Brenner dient ein in dem Nebenstrang angeordneter Oxidationskatalysator mit vorgeschalteter Kohlenwasserstoffinjektion. Zum Steuern des den Nebenstrang durchströmenden Abgasmassenstroms befindet sich im Hauptstrang eine Abgasklappe, durch die die frei durchströmbare Querschnittsfläche im Hauptstrang eingestellt werden kann. Für die Zwecke des Erwärmens des in den Nebenstrang eingeschalteten Oxidationskatalysators auf seine light-off-Temperatur - diejenige Temperatur, ab der an der katalytischen Oberfläche die gewünschte exotherme HC-Konvertierung erfolgt - ist diesem ein elektrothermisches Heizelement vorgeschaltet. Dieses wird betrieben, wenn dieser Oxidationskatalysator auf seine light-off-Temperatur erwärmt werden muss. Beschrieben ist in diesem Dokument auch, dass der in den Nebenstrang eingeschaltete katalytische Brenner überspritzt werden kann, um auf diese Weise Kohlenwasserstoffe einem zweiten, dem Partikelfilter in Strömungsrichtung unmittelbar vorgeschalteten Oxidationskatalysator, zuzuführen, damit diese mit derselben exothermen Reaktion an der katalytischen Oberfläche dieses zweiten Oxidationskatalysators reagieren können. Somit kann bei dieser vorbekannten Abgasreinigungsanlage ein zweistufiges Erwärmen des Abgases vorgenommen werden. Das aus dem zweiten Oxidationskatalysator ausströmende Abgas weist sodann die notwendige Temperatur auf, um den auf der Anströmseite des Partikelfilters akkumulierten Ruß soweit zu erwärmen, dass dieser oxidiert.

In gleicher Weise kann es gewünscht sein, die Temperatur anderer Abgasreinigungsaggregate, beispielsweise eines Oxidationskatalysators oder einer SCR-Stufe zu erhöhen, um diese rascher auf ihre Betriebstemperatur zu bringen.

DE 10 2006 033 929 A1 beschreibt ein Verfahren zur Adaption der Dosierung eines in den Abgasbereich einer Brennkraftmaschine einzubringenden Reagenzmittels sowie eine Vorrichtung zur Durchführung des Verfahrens. Als Reagenzmittel kann bei diesem Verfahren Kraftstoff dienen, welches in den Abgasstrang eingebracht wird, um eine gezielte Erwärmung etwa der Abgas-Reinigungsvorrichtung zu bewirken, der ein Katalysator vorgeschaltet ist. Kern dieses vorbekannten Verfahrens ist, dass eine Adaption vorgenommen wird, um den für die Reagenzmittelzuführung vorgesehenen Regler besser ansteuern zu können und somit eine ungenaue Dosierung zu vermeiden.

Ausgehend von diesem diskutierten Stand der Technik liegt der Erfindung die Aufgabe zugrunde, ein Verfahren vorzuschlagen, mit dem vor allem bei einem dynamischen Betrieb der Brennkraftmaschine, beispielsweise eines Dieselmotors in einem Fahrzeug, in kurzer Zeit und zumindest weitestgehend unbeeinflusst durch sich ändernde Zustände im Abgasstrang, wie etwa sich ändernde Abgasmassenströme, zielgerichtet ein Regenerationsprozess zum Regenerieren eines Partikelfilters ausgelöst werden kann.

Gelöst wird diese Aufgabe erfindungsgemäß durch ein Verfahren mit den Merkmalen des Oberbegriffes des Anspruchs 1, bei dem
- in Abhängigkeit von der Masse des von der Brennkraftmaschine ausgestoßenen Gesamtabgasstromes, der IST-Temperatur und der SOLL-Temperatur des das Abgasreinigungsaggregat anströmenden Abgases mittels einer aus einem den Abgasstrom und den zu erzielenden Temperaturhub berücksichtigenden Vorsteuerkennfeld den aktuellen Bedingungen entsprechenden oder nahe kommenden Vorsteuergröße die HC-Dosierung zum Zuführen von Kohlenwasserstoffen in den Nebenstrang stromauf des ersten Oxidationskatalysators und/oder der den Nebenstrang durchströmende Abgasmassenstrom eingestellt werden,
- wiederholt die IST-Temperatur des das Abgasreinigungsaggregat anströmenden Abgases erfasst wird und
- bei Feststellen einer Differenz zwischen der IST-Temperatur und der SOLL-Temperatur die Einstellung der HC-Dosierung und/oder des den Nebenstrang durchströmenden Abgasmassenstroms zum Erreichen der SOLL-Temperatur geändert wird, wobei die Schritte des Temperatur-Monitorings so oft wiederholt werden, bis die SOLL-Temperatur erreicht ist.

Bei diesem Verfahren werden die aktuellen Zustände innerhalb des Abgasstranges betreffend die diesen durchströmende Abgasmasse und die das Abgasreinigungsaggregat, also beispielsweise den Partikelfilter anströmende Abgastemperatur berücksichtigt. Dabei wird davon ausgegangen, dass das Abgasreinigungsaggregat annähernd diejenige Temperatur aufweist, die der das Abgasreinigungsaggregat anströmende Abgasstrom hat. In einem ersten Schritt wird der Abgasmassenstrom bestimmt, den die Brennkraftmaschine ausstößt. Zudem wird die vorgenannte IST-Temperatur ermittelt. Diese Angaben werden benötigt, um unter Berücksichtigung der SOLL-Temperatur - derjenigen Temperatur, die das das Abgasreinigungsaggregat anströmende Abgas aufweisen soll - die Zuführung der thermischen Energie zu steuern. Bei einem Partikelfilter würde die SOLL-Temperatur diejenige Temperatur sein, die für die Zwecke des Auslösens eines Regenerationsprozesses des Filters vorhanden sein muss. Damit der das Abgasreinigungsaggregat anströmende Abgasstrom in möglichst kurzer Zeit anströmseitig bezüglich desselben auf die SOLL-Temperatur gebracht werden kann, wird eine erste Einstellung der auf den Erwärmungsprozess zum Erwärmen des Abgasstromes Einfluss nehmenden Parameter - HC-Dosierung an den ersten Oxidationskatalysator sowie der über diesen im Nebenstrang geleitete Abgasmassenstrom - anhand einer aus einem diesbezüglich hinterlegten Vorsteuerkennfeld abgegriffenen Vorsteuergröße vorgenommen. Ausgewählt wird aus dem Feld der hinterlegten Vorsteuergrößen diejenige, die den aktuellen Werten (Gesamtabgasmassenstrom und zu erzielender Temperaturhub) entspricht oder sollte eine solche Vorsteuergröße nicht hinterlegt sein, die dieser nahe kommt. Ist eine Vorsteuergröße im Kennfeld nicht vorhanden, so wird zwischen den diese Vorsteuergröße umgebenden vorhandenen Vorsteuergrößen interpoliert. Liegt die benötigte Vorsteuergröße außerhalb des Kennfeldes, kann entweder extrapoliert oder die letzte im Kennfeld hinterlegte Steuergröße verwendet werden. Bei einer durch Interpolation oder durch Extrapolation gewonnenen Steuergröße werden anhand dieser die Betriebsparameter zum Betrieb des katalytischen Brenners eingestellt. Die Verwendung eines solchen Vorsteuerkennfeldes gestattet eine zielgerichtete Einstellung der für den Temperaturhub maßgeblichen Parameter, wodurch nicht nur die Zeit zum Erreichen der SOLL-Temperatur reduziert ist, sondern dieses auch Ressourcen-schonend vorgenommen werden kann. Schließlich kann durch eine solche Maßnahme eine übermäßige Erwärmung und damit ein übermäßiger Kraftstoffverbrauch (HC-Verbrauch) vermieden werden.

Die IST-Temperatur wird wiederholt ausgangsseitig bezüglich des zweiten Oxidationskatalysators erfasst. Bei dieser Temperatur handelt es sich um diejenige Temperatur, die der Abgasstrom beim Anströmen des Abgasreinigungsaggregates aufweist. Auf diese Weise kann der bewirkte Temperaturhub kontrolliert werden. Wird eine Differenz zwischen der IST-Temperatur und der SOLL-Temperatur im Rahmen dieser Beobachtung festgestellt, wird die Dosierung der Kohlenwasserstoffe und/oder der den Nebenstrang durchströmende Abgasmassenstrom entsprechend geändert. Ist durch die Vorsteuereinstellung der gewünschte Temperaturhub noch nicht bewirkt, mithin die gewünschte SOLL-Temperatur noch nicht erreicht worden, kann beispielsweise die HC-Dosierung erhöht werden, um eine höhere Erwärmung zu erzielen. Andererseits kann die HC-Dosierung reduziert werden, sollte die IST-Temperatur deutlich höher als die SOLL-Temperatur sein.

Durch das der Voreinstellung nachgeschaltete wiederholte Erfassen der IST-Temperatur können nicht nur die im Vorsteuerkennfeld abgelegten Vorsteuergrößen kontrolliert werden. Vielmehr werden durch diese Maßnahme Änderungen vor allem hinsichtlich des den Abgasstrang durchströmenden Abgasmassenstromes, die seit der oder den für die Ermittlung der Vorsteuergröße zugrunde gelegten Bedingungen, etwa durch einen dynamischen Betrieb der Brennkraftmaschine unverzüglich berücksichtigt. Dieses gilt vor allem bei einem dynamischen Betrieb der Brennkraftmaschine im kalten Zustand, wenn durch eine Änderung des Betriebszustandes der Abgasmassenstrom ansteigt und insofern kühlend wirkt. In einem solchen Fall würde die HC-Dosierung entsprechend erhöht werden.

Die Schritte des Beobachtens bzw. Erfassens der IST-Temperatur und der Vergleich derselben mit der SOLL-Temperatur, was im Rahmen dieser Ausführung als Temperatur-Monitoring abgesprochen ist, wird so oft wiederholt oder fortlaufend vorgenommen, bis die SOLL-Temperatur erreicht ist. Bevorzugt ist allerdings eine Ausgestaltung, bei der über eine gewisse Zeitspanne hinweg überwacht wird, dass die SOLL-Temperatur aufrecht erhalten bleibt. Bei einem Partikelfilter als Abgasreinigungsaggregat wird typischerweise über die gesamte Dauer des Regenerationsprozesses das Temperatur-Monitoring durchgeführt, damit der Regenerationsprozess bestimmungsgemäß abläuft.

Vorteilhaft bei diesem Verfahren ist die zweitstufige Erwärmung, da dieses eine unterschiedliche Ausgestaltung der Oxidationskatalysatoren ermöglicht. Mithin kann der im Nebenstrang angeordnete Oxidationskatalysator deutlich kleinere Maße aufweisen als der im Hauptstrang befindliche. Mithin dient der im Nebenstrang angeordnete katalytische Brenner zum Erwärmen des typischerweise größeren, im Hauptstrang angeordneten, damit dieser auf seine light-off-Temperatur erwärmt wird. Auch kann, was in einem bevorzugten Ausführungsbeispiel vorgesehen ist, der im Nebenstrang angeordnete Oxidationskatalysator eine höhere Edelmetallbeladung aufweisen als der diesem nachgeschaltete zweite Oxidationskatalysator. Dieses bringt Kostenvorteile mit sich.

Die nachgeschaltete Kontrolle des durch die Vorsteuereinstellung erzielten Temperaturhubes wird typischerweise genutzt, um, für den Fall, dass die Einstellungen im Zuge dieses Verfahrens nachgeregelt worden sind, diese neuen Einstellungsparameter als neue Vorsteuergröße oder als die ursprünglich vorhandene Vorsteuergröße ersetzende Vorsteuergröße in dem Vorsteuerkennfeld abzulegen. Ein solches Verfahren ist sodann selbstlernend, wodurch systembedingte Änderungen, beispielsweise durch Alterungserscheinung, etwa der Oxidationskatalysatoren oder dergleichen hervorgerufen, automatisch kompensiert werden. Zugleich ist hierdurch die Möglichkeit geschaffen, ein zunächst nur mit einigen wenigen Vorsteuergrößen belegtes Vorsteuerkennfeld über die Betriebsdauer der Brennkraftmaschine mit einer sehr viel größeren Anzahl an Vorsteuergrößen zu belegen oder alternativ im Kennfeld enthaltene Vorsteuergrößen zu korrigieren.

Der Gesamtabgasmassenstrom, der von der Brennkraftmaschine ausgestoßen wird, kann, wenn eine Schnittstelle zum Motormanagement vorhanden ist oder geschaffen werden kann, über die Funktionen von "Last" und "Drehzahl" ermittelt bzw. bereitgestellt werden. Die Last lässt sich beispielsweise über die angesaugte Luftmenge ermitteln. Alternativ oder auch ergänzend hierzu kann der Gesamtabgasmassenstrom auch dadurch bestimmt werden, dass dieser mit einer definierten Energiemenge erwärmt wird und anschließend der mit dieser Energiemenge erzielte Temperaturhub ermittelt wird. Die in den Abgasmassenstrom eingebrachte Energiemenge ist proportional zu dem damit erzielbaren Temperaturhub. Daher kann auf einfache Weise der Abgasmassenstrom berechnet werden, wenn die zugeführte Energiemenge und der damit bewirkte Temperaturhub bekannt sind. Es versteht sich, dass in eine solche Berechnung Korrekturgrößen, wie beispielsweise Abkühlung über eine gewisse Strömungsstrecke oder dergleichen, bei der Ermittlung des Temperaturhubes berücksichtigt werden. Eine solche Ausgestaltung eignet sich insbesondere für Nachrüstlösungen oder bei solchen Anwendungen, bei denen keine Schnittstelle zum Motormanagement vorhanden ist oder geschaffen werden kann.

Um das Verfahren auch bereits dann ausführen zu können, wenn der im Nebenstrang angeordnete Oxidationskatalysator noch nicht seine light-off-Temperatur erreicht hat, ist gemäß einem Ausführungsbeispiel vorgesehen, dem Oxidationskatalysator vorgeschaltet ein thermoelektrisches Heizelement anzuordnen. Dieses dient zum Vorerwärmen des durch den Nebenstrang strömenden Abgasstromes, mit dem sodann der dem Heizelement nachgeschaltete Oxidationskatalysator erwärmt wird. Für die Zwecke des Vorerwärmens des Oxidationskatalysators kann diese mit konstanter elektrothermischer Heizleistung und variablem Abgasmassenstrom oder auch mit variabler Heizleistung bei einem konstanten Abgasmassenstrom durchgeführt werden.

Es versteht sich, dass die vorbeschriebene Gesamtmassenstromermittlung durch Auswerten des Temperaturhubes bei Einbringen einer definierten Energiemenge sowohl unter Verwendung des Oxidationskatalysators und entsprechender Dosierung von Kohlenwasserstoffen als auch mit einem solchen elektrischen Heizelement vorgenommen werden kann. Bevorzugt ist für diese Zwecke die Verwendung eines thermoelektrischen Heizelementes, da eine Gesamtmassenstromermittlung vorgenommen werden kann, unabhängig davon, ob der Oxidationskatalysator sich bereits auf oder oberhalb seiner light-off-Temperatur befindet oder nicht. Zudem ist die eingebrachte Energiemenge bei einem solchen Heizelement genauer zu bestimmen, was daran liegt, dass weniger Faktoren auf die Erwärmung des Abgasstromes Einfluss haben, als wenn zu diesem Zwecke der im Nebenstrang angeordnete katalytische Brenner verwendet würde.

Über eine geeignete Steuereinrichtung wird der über den Nebenstrang geleitete Abgasmassenstrom eingestellt. Hierbei kann es sich beispielsweise um eine im Hauptstrang angeordnete Abgasklappe handeln. Es versteht sich, dass anstelle einer Abgasklappe ebenfalls einstellbare Drosseln, Ventile oder dergleichen eingesetzt werden können. Eine solche Einrichtung kann auch im Nebenstrang oder in beiden Strängen angeordnet sein.

Dieses Verfahren wird typischerweise angewandt, wenn der Abgasstrom die für eine selbsttätige Partikelfilterregeneration notwendige Temperatur noch nicht erreicht hat, mithin vor allem bei kalten Abgastemperaturen, etwa bei solchen Temperaturen, die ein Abgas nach einem Motorstart, bei Leerlauf oder bei Niedriglast aufweist.

Gemäß einer bevorzugten Ausgestaltung des Verfahrens weist der im Nebenstrang angeordnete Oxidationskatalysator eine niedrigere light-off-Temperatur auf als der zweite, im Hauptstrang angeordnete Oxidationskatalysator. Dies hat zum Vorteil, dass das Verfahren bei tieferen Temperaturen bereits genutzt werden kann, und zwar ohne dass der hinsichtlich seiner Größe dem Abgasreinigungsaggregat, etwa dem Partikelfilter vorgeschaltete zweite Oxidationskatalysator eine besonders hohe Katalysatorbeladung aufweisen müsste. Selbstverständlich kann es sich bereits bei dem vorgenannten zweiten Oxidationskatalysator um das auf seine SOLL-Temperatur zu bringende Abgasreinigungsaggregat handeln. Dieses bringt nicht unerhebliche Kostenvorteile mit sich. Um eine niedrige light-off-Temperatur eines Oxidationskatalysators zu erhalten, muss dieser eine entsprechend hohe Beladung eines Edelmetalls aufweisen. Bei dieser Verfahrensausgestaltung braucht dieses nur der im Nebenstrang angeordnete Oxidationskatalsator zu haben, der wiederum hinsichtlich seiner Baugröße relativ klein ist. Die hinsichtlich seiner Baugröße relativ kleine Ausgestaltung des ersten Oxidationskatalysators bedingt zudem, dass dieser, da nur eine geringere Masse erwärmt werden muss, rascher auf seine light-off-Temperatur gebracht werden kann.

Die HC-Dosierung zur Versorgung des zweiten Oxidationskatalysators erfolgt vorzugsweise durch die HC-Dosierung, mit der Kohlenwasserstoffe dem ersten Oxidationskatalysator zugeführt werden. Ausgenutzt wird hierbei der Umstand, dass an dem ersten Oxidationskatalysator nur eine bestimmte HC-Menge konvertiert werden kann. Dies bedeutet, dass bei einer Überdosierung - einem sogenannten Überspritzen - Kohlenwasserstoffe unkonvertiert aus dem ersten Oxidationskatalysator austreten und als Brennstoff dem zweiten Oxidationskatalysator zugeführt werden können. Typischerweise ist vorgesehen, dass ein solches Überspritzen erst dann erfolgt, wenn der zweite Oxidationskatalysator seine light-off-Temperatur erreicht hat. Beobachtet werden kann dieses beispielsweise durch einen mit kurzem Abstand dem zweiten Oxidationskatalysator vorgeschalteten Temperatursensor. Bevorzugt wird die HC-Dosierung und die Abgasmassenstromregelung zur Versorgung des zweiten Oxidationskatalysators mit Kohlenwasserstoffen derart durchgeführt, damit diesem Kohlenwasserstoffe in Gasphase zugeführt werden, um die gewünschte Reaktion an der katalytischen Oberfläche spontan auszulösen. Zudem unterstützt dieses eine Gleichverteilung von dem zweiten Oxidationskatalysator zugeführten Kohlenwasserstoffen auf seiner reaktiven Oberfläche.

Ein dem ersten Oxidationskatalysator vorgeschaltetes Heizelement wird zweckmäßigerweise auch genutzt, um die in dem Nebenstrang dosierten Kohlenwasserstoffe daran verdampfen zu lassen, damit auf diese Weise auch dem ersten Oxidationskatalysator die Kohlenwasserstoffe in Gasphase zugeführt werden. Hierdurch wird nicht nur die Reaktionsgeschwindigkeit beschleunigt, sondern dieses dient auch zur Unterstützung einer Kohlenwasserstoffgleichverteilung über die Oberfläche des Oxidationskatalysators. Zudem werden bei einem solchen Aufschließen der zugeführten Kohlenwasserstoffe vor deren Kontakt mit dem Oxidationskatalysator Wärmeverluste vermieden, die ansonsten bei Auftreffen von Flüssigkeitstropfen auf der katalytischen Oberfläche hingenommen werden müssten. Mithin ist der Wirkungsgrad des Oxidationskatalysators hierdurch nicht unerheblich verbessert. Zweckmäßigerweise erfolgt eine HC-Dosierung bei einer solchen Ausgestaltung frontal auf das Heizelement. Wenn der erste Oxidationskatalysator hinreichend erwärmt ist, kann das Heizelement ausgeschaltet werden, da dann eine spontane Verdampfung an dem Oxidationskatalysator ohnehin erfolgt. Bei einer solchen Ausgestaltung ist es zweckmäßig, das Heizelement hinsichtlich seiner Leistung variabel anzusteuern, insbesondere auch unabhängig von dem durch den Nebenstrang strömenden Abgasmassenstrom. Eine Einspritzung der Kohlenwasserstoffe nachmotorisch hat nicht nur einen höheren Wirkungsgrad, verglichen mit einem Zuführen von Kohlenwasserstoff durch innermotorische Maßnahmen, zur Folge sondern zudem ist dann auch eine Öl-Verdünnung durch Kohlenwasserstoffe vermieden.

Zum Betreiben des vorbeschriebenen Verfahrens ist es zweckmäßig, vor einer Inbetriebnahme des ersten Oxidationskatalysators den von der Brennkraftmaschine ausgestoßenen Abgasstrom zumindest anteilig durch den Nebenstrang für die Zwecke seiner Vorerwärmung zu leiten. Zweckmäßig ist es auch, nach dem Ende einer Betriebsphase des im Nebenstrang enthaltenen Oxidationskatalysators zum Zwecke des Spülens von der Brennkraftmaschine ausgestoßenes Abgas durch den Nebenstrang zu leiten. Dieses dient zum einen dem Zweck, dass der Oxidationskatalysator durch das diesen durchströmende und gegenüber seiner Temperatur relative kühle Abgas gekühlt wird und nicht überhitzt. Des Weiteren werden aus dem Nebenstrang unter Umständen in diesem noch enthaltene Kohlenwasserstoffe entfernt. Das vorbeschriebene Nachspülen wird vorzugsweise unmittelbar im Anschluss an einen katalytischen Betrieb des ersten Oxidationskatalysators durchgeführt. Dann ist der Oxidationskatalysator noch warm genug, damit im Nebenstrang enthaltene Kohlenwasserstoffe daran reagieren und mithin nicht als Kohlenwasserstoffe austreten. Somit wird hierdurch auch einem möglichen Kohlenwasserstoffschlupf entgegengewirkt.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: Eine schematisierte Darstellung einer Abgasreinigungsanlage,
- **Fig. 2:**: Diagramme zum Darstellen des Temperaturverhaltens an unterschiedlichen Stellen innerhalb der Abgasreinigungsanlage bei Durchlaufen eines NRTC-Tests,
- **Fig. 3:**: Diagramme zum Darstellen des Temperaturverhaltens an unterschiedlichen Stellen innerhalb der Abgasreinigungsanlage bei Durchlaufen eines WHTC-Tests und
- **Fig. 4:**: Eine schematisierte Darstellung zum Zusammenfassen der Ergebnisse der Tests, dargestellt in den Figuren 2 und 3.

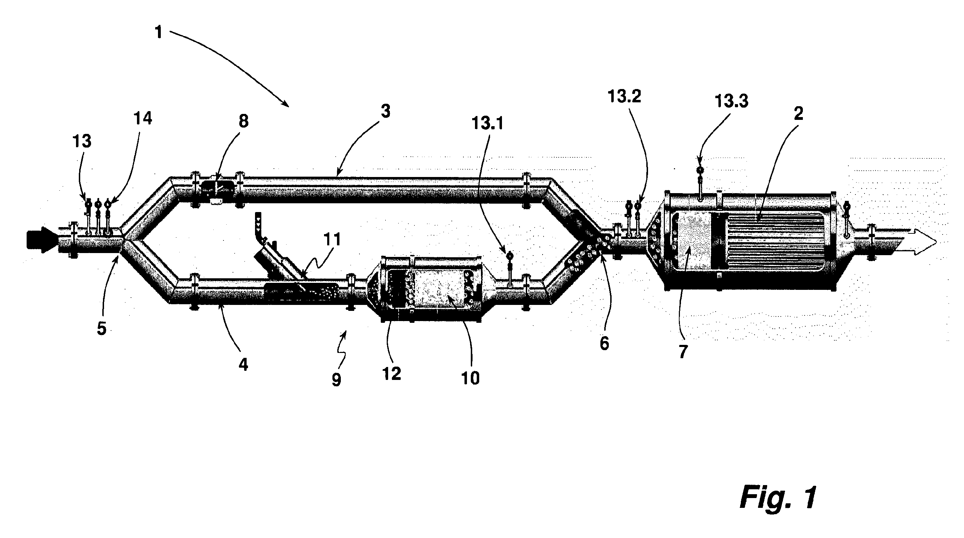

Eine Abgasreinigungsanlage 1 ist einem Dieselmotor eines Fahrzeuges nachgeschaltet. Der Dieselmotor selbst ist in Figur 1 nicht dargestellt.

Als Abgasreinigungsaggregat verfügt die Abgasreinigungsanlage 1 u. a. über einen Partikelfilter 2. Dem Partikelfilter 2 vorgeschaltet ist der Abgasstrang der Abgasreinigungsanlage 1 in einen Hauptstrang 3 und einen Nebenstrang 4 geteilt. Der Hauptstrang 3 ist Teil des eigentlichen Abgasstranges, wohingegen der Nebenstrang 4 nach Art eines Bypass konzipiert ist. Bei dem dargestellten Ausführungsbeispiel ist die frei durchströmbare Querschnittsfläche im Hauptstrang 3 und im Nebenstrang 4 gleich. Gleichfalls sind Ausgestaltungen möglich, bei der die frei durchströmbare Querschnittsfläche im Nebenstrang 4 kleiner oder auch größer ist als im Hauptstrang 3. Der Abgasstrang verzweigt sich an der mit den Bezugszeichen 5 gekennzeichneten Position in den Hauptstrang 3 und den Nebenstrang 4. An der Position 6 mündet der Nebenstrang 4 wiederum in den Hauptstrang 3. Der Position 6 nachgeschaltet ist der Partikelfilter 2 angeordnet. Diesem ist ein Oxidationskatalysator 7 unmittelbar vorgeschaltet.

Zum Zwecke der Regelung des Abgasmassenstroms, der durch den Nebenstrang 4 strömen soll, dient bei dem dargestellten Ausführungsbeispiel eine in den Hauptstrang 3 eingesetzte Abgasklappe 8. In den Nebenstrang 4 eingeschaltet ist ein katalytischer Brenner 9. Der katalytische Brenner 9 umfasst einen Oxidationskatalysator 10 und einen diesem in Strömungsrichtung des Abgases vorgeschalteten HC-Port 11 zum Dosieren von Kohlenwasserstoffen in den Nebenstrang 4. Bei dem dargestellten Ausführungsbeispiel ist dem Oxidationskatalysator 10 im Gehäuse desselben ein elektrisches Heizelement 12 vorgeschaltet. Der Einfachheit halber ist der elektrische Anschluss des Heizelementes 12 nicht dargestellt, ebenso wie der Anschluss des HC-Ports 11 an die Dieselkraftstoffversorgung des Motors.

Die Abgasreinigungsanlage 1 des dargestellten Ausführungsbeispieles verfügt über vier Temperatursensoren 13, 13.1, 13.2, 13.3. Der Temperatursensor 13 ist vor der Verzweigung 5 angeordnet. Der Temperatursensor 13.1 dient zum Erfassen der Ausgangstemperatur des Oxidationskatalysators 10. Der Temperatursensor 13.2 ist eingangsseitig bezüglich des Oxidationskatalysators 7 und der Temperatursensor 13.3 ausgangsseitig bezüglich diesem angeordnet. Zum Teil lassen sich die Temperatursensoren auch durch die Verwendung von Temperaturmodellen ersetzen, beispielsweise die Temperatursensoren 13 und/oder 13.2.

In Strömungsrichtung des von dem Dieselmotor ausgestoßenen Abgases kann durch Ansteuerung der Abgasklappe 8 der den Nebenstrang 4 durchströmende Abgasmassenstrom, der über den dem Dieselmotor näheren, ersten Oxidationskatalysator 10 geleitet werden soll, geregelt werden. Das bei einem Betrieb des katalytischen Brenners 9 erwärmte Abgas wird mit dem über den Hauptstrang 3 strömenden Abgas nach dem Zusammenführen der beiden Stränge 3, 4 vor dem Oxidationskatalysator 7 vermischt, sodass der den Oxidationskatalysator 7 anströmende Abgasstrom eine den jeweiligen Anteilen der Abgasteilströme entsprechende Mischtemperatur aufweist. Der katalytische Brenner 10 dient zum Erwärmen des Oxidationskatalysators 7, um diesen auf und über seine light-off-Temperatur zu bringen.

Der dem Dieselmotor nachgeschaltete im Nebenstrang 4 angeordnete Oxidationskatalysator 10 ist verglichen mit dem zweiten Oxidationskatalysator 7 von deutlich geringerer Baugröße. Zudem ist die katalytische Beladung der beiden Oxidationskatalysatoren 7, 10 unterschiedlich. Der Oxidationskatalysator 10 weist eine höhere Edelmetallbeladung, beispielsweise unter Verwendung von Platin auf als der Oxidationskatalysator 7. Mithin ist die light-off-Temperatur des Oxidationskatalysators 10 geringer als diejenige des diesem nachgeschalteten zweiten Oxidationskatalysators 7. Bei dem dargestellten Ausführungsbeispiel ist die Beladung des Oxidationskatalysators 10 eingestellt, damit dieser eine light-off-Temperatur bei etwa 200 Grad Celsius aufweist. Die Beladung des Oxidationskatalysators 7 ist geringer. Seine light-off-Temperatur liegt bei dem dargestellten Ausführungsbeispiel etwa bei 250 Grad. Diese kann, wenn gewünscht, auch höher liegen.

Der Oxidationskatalysator 7 erhält die zum Erwärmen des Abgasstromes mit seiner Hilfe notwendigen Kohlenwasserstoffe über den HC-Port 11, und zwar durch Dosieren einer HC-Menge, die größer ist als diejenige Menge, die von dem Oxidationskatalysator 10 konvertiert werden kann. Die nicht am Oxidationskatalysator 10 konvertierten Kohlenwasserstoffe konvertieren sodann an dem Oxidationskatalysator 7 mit dem gewünschten exothermen Effekt.

Die Sensoren und Aktoren der Abgasreinigungsanlage 1 sind an eine nicht näher dargestellte Steuereinheit angeschlossen. Über diese können die Sensoren, hier vor allem die Temperatursensoren 13, 13.1, 13.2, 13.3 ausgelesen und die Aktoren, hier: Der HC-Port 11, das Heizelement 12 und die Abgasklappe 8 angesteuert werden. Die Steuereinheit hat Zugriff auf eine Vorsteuerung, in der Einstellungen der vorgenannten Aktoren der Abgasreinigungsanlage 1 in Abhängigkeit von dem von dem Dieselmotor ausgestoßenen Abgasmassenstrom, dem darin enthaltenen Sauerstoffgehalt und seiner Temperatur in Bezug auf eine SOLL-Temperatur, bei der eine Regeneration des Partikelfilters 2 stattfindet, abgelegt sind.

Durch die vorbeschriebene Ausgestaltung der Abgasreinigungsanlage 1 ist ein zweistufiger katalytischer Brenner zum Erwärmen des Partikelfilters 2 auf eine Regenerationstemperatur gebildet, mit dem selbst kühles Abgas in kurzer Zeit und auch bei einem dynamischen Betrieb des Dieselmotors auf die notwendige Temperatur zum Auslösen des Regenerationsprozesses erwärmt werden kann. Dabei bildet der im Nebenstrang 4 enthaltene katalytische Brenner zusammen mit dem parallelen Hauptstrang 3 mit der darin eingeschalteten Abgasklappe 8 ein Heizmodul. Eine Erwärmung des ausgestoßenen Abgases, damit der Partikelfilter regeneriert wird, erfolgt mit folgenden Verfahrensschritten:

Soll eine Regeneration des Partikelfilters 2 bei niedrigen Abgastemperaturen vorgenommen werden, also bei Temperaturen, bei der eine Rußoxidation nicht selbsttätig abläuft, werden die Aktoren 8, 11, 12 der Abgasreinigungsanlage 1 zum Zuführen von zusätzlicher Wärme in den Abgasstrom in Abhängigkeit von dem aktuell ausgestoßenen Abgasmassenstrom und seiner Temperatur eingestellt. Der Abgriff einer solchen Vorsteuergröße erlaubt, dass in kurzer Zeit die Abgastemperatur anströmseitig bezüglich des Partikelfilters 2 die SOLL-Temperatur aufweist. Bei dem dargestellten Ausführungsbeispiel verfügt die Abgasreinigungsanlage 1 auch über eine Lamda-Sonde 14, mit der der im Abgasstrom enthaltene Sauerstoffgehalt festgestellt werden kann. Auch dieser ist in dem Vorsteuerkennfeld hinterlegt als Bedingung für die abzugreifende Vorsteuergröße.

Mit der aus dem Vorsteuerkennfeld entnommenen Vorsteuergröße werden sodann die Aktoren 8, 11 und 12 eingestellt. Bei dem dargestellten Ausführungsbeispiel dient das dem Oxidationskatalysator 10 vorgeschaltete Heizelement 12 nicht nur zum Vorerwärmen des den Oxidationskatalysator 10 anströmenden Abgasstromes, um diesen auf bzw. über seine light-off-Temperatur zu bringen, sondern auch, um die über den HC-Port 11 dosierte HC-Menge zu verdampfen. Mithin ist ausgangsseitig bezüglich des Heizelementes 12 der Abgasmassenstrom mit darin in Gasphase befindlichen Kohlenwasserstoffen angereichert. Um eine besonders gute Gleichverteilung der Kohlenwasserstoffe innerhalb des Abgasstromes beim Anströmen des Oxidationskatalysators 10 zu haben, ist in einem in den Figuren nicht dargestellten Ausführungsbeispiel vorgesehen, das Heizelement 12 zentral mit den eingebrachten Kohlenwasserstoffen zu beaufschlagen. Das Heizelement 12 hat zudem den Vorteil, dass der HC-Port 11 quasi unmittelbar vor dem Heizelement 12 angeordnet sein kann. Dadurch kann die Abgasreinigungsanlage 1 sehr kompakt bauend ausgelegt werden. In Abhängigkeit von der Stellung der Abgasklappe 8 strömt entsprechend der Einstellung der gesamte Abgasmassenstrom durch den Nebenstrang 4 oder nur ein Teil desselben.

Bei dem dargestellten Ausführungsbeispiel wird der aktuell von dem Dieselmotor ausgestoßene Abgasmassenstrom durch durch das Motormanagement zur Verfügung gestellte Daten, hier: Last und Drehzahl ermittelt.

Durch Erwärmen des den Nebenstrang 4 durchströmenden Abgasmassenstromes wird der zweite Oxidationskatalysator 7 erwärmt und über seine light-off-Temperatur gebracht. Kontrolliert wird dieses über die Temperatursensoren 13.2 bzw. 13.3. Hat der Oxidationskatalysator 7 seine light-off-Temperatur erreicht, wird die HC-Dosierung erhöht, um durch Überspritzen des Oxidationskatalysators 10 dem Oxidationskatalysator 7 die für die gewünschte exotherme Reaktion notwendigen Kohlenwasserstoffe zuzuführen. Über den Temperatursensor 13.3 wird die Temperatur des Abgasstromes ausgangsseitig bezüglich des Oxidationskatalysators 7 und damit anströmseitig bezüglich des Partikelfilters 2 erfasst. Über einen IST-SOLL-Temperaturvergleich wird ermittelt, ob die vorgenommene Einstellung zu dem gewünschten Temperaturhub geführt hat. Weicht die IST-Temperatur von der SOLL-Temperatur ab, wird die Einstellung hinsichtlich der HC-Dosierung und/oder der den Nebenstrang 4 durchströmenden Abgasmassenstrom durch entsprechende Einstellung der Abgasklappe 8 geändert. Durch dieses Temperatur-Monitoring ausgangsseitig bezüglich des Oxidationskatalysators 7 wird nicht nur die in dem Vorsteuerkennfeld abgelegte Vorsteuergröße kontrolliert, sondern hierdurch werden vor allem auch Änderungen im Betrieb des Dieselmotors quasi sofort erfasst und durch entsprechende Änderung in der Einstellung der HC-Dosierung bzw. des durch den Nebenstrang 4 geleiteten Abgasmassenstroms zur Aufrechterhaltung der SOLL-Temperatur, zumindest soweit wie möglich, kompensiert. Die geänderte Einstellung kann, wenn gewünscht, zudem als neue oder gegebenenfalls zusätzliche Vorsteuergröße in dem Vorsteuerkennfeld abgelegt werden und steht sodann für zukünftige Regenerationsprozesse zur Verfügung.

Weist der den Partikelfilter 2 anströmende Abgasstrom eine Temperatur oberhalb der Rußoxidationstemperatur auf, also etwa 600 - 610 Grad Celsius, beginnt der gewünschte Regenerationsprozess. Das vorbeschriebene Temperatur-Monitoring wird bei dem dargestellten Ausführungsbeispiel nicht nur genutzt, um den Regenerationsprozess auszulösen, sondern auch, um sicher zu stellen, dass über die Dauer des Regenerationsprozesses der Partikelfilter 2 mit einem Abgas angeströmt wird, welches zumindest die notwendige Rußoxidationstemperatur aufweist. Dabei kann vorgesehen sein, dass durch vorheriges Ermitteln der auf der Filteroberfläche akkumulierten Rußmenge die Regenerationsdauer bestimmt oder abgeschätzt wird. Für diese Zeit wird sodann das vorbeschriebene Temperatur-Monitoring mit entsprechendem Anpassen der in Rede stehenden Aktoren der Abgasreinigungsanlage 1, falls notwendig, durchgeführt. Nach Abschluss des Regenerationsprozesses wird die Abgasklappe 8 in eine Stellung gebracht, dass der Abgasstrom vornehmlich über den Hauptstrang 3 strömt.

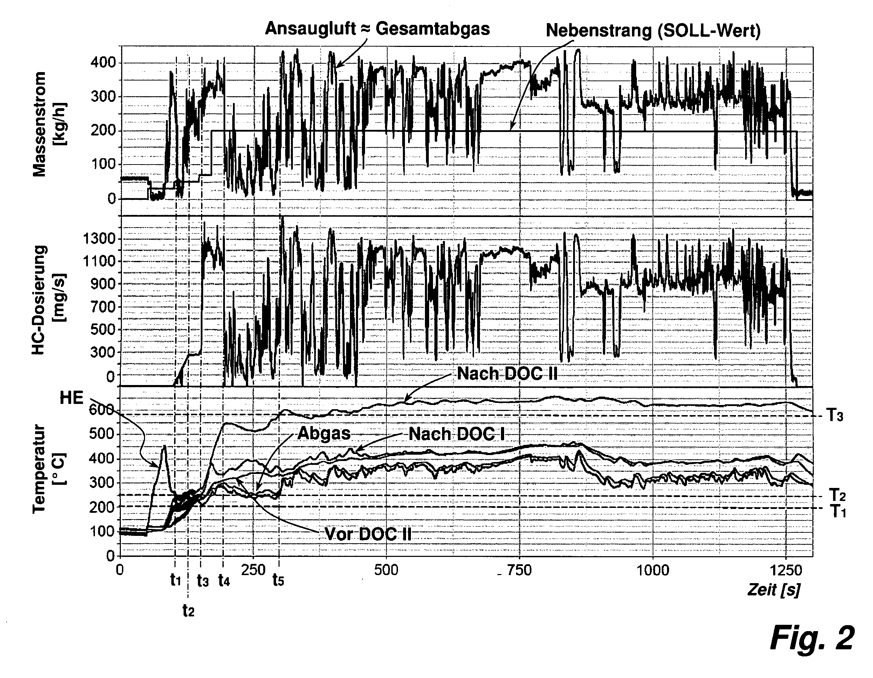

Figur 2 zeigt ein Regenerationsprotokoll einer Versuchsdurchführung, bei der der Dieselmotor in Anlehnung an den Non-Road-Transient-Cycle (NRTC) betrieben worden ist. Hierbei handelt es sich um einen dynamischen Test. In dem oberen Diagramm der Figur 2 ist der Gesamtabgasmassenstrom aufgetragen. Der dynamische Betrieb des Dieselmotors wird durch die diesbezüglichen erkennbaren Schwankungen deutlich. Aufgetragen in dem obersten Diagramm ist zudem der Sollwert des durch den Nebenstrang 4 geleiteten Abgasmassenstroms. Das mittlere Diagramm zeigt die über den HC-Port 11 zugeführte HC-Menge. In dem unteren Diagramm sind Temperaturkurven aufgetragen.

Bei diesem Versuch liegt die von dem Dieselmotor zu Beginn des Versuches ausgestoßene Abgastemperatur (Kurve "Abgas") bei etwa 100 Grad Celsius. Bei dieser Abgastemperatur soll eine Partikelfilterregeneration herbeigeführt werden. In einem ersten Schritt wird der im Nebenstrang 4 angeordnete Oxidationskatalysator 10 auf bzw. oberhalb seiner light-off-Temperatur gebraucht. Zu diesem Zweck wird durch den Nebenstrang 4 ein Abgasteilstrom geleitet und das Heizelement 12 bestromt. Die Temperaturkurve des Heizelementes 12 ist in dem unteren Diagramm gezeigt und mit HE bezeichnet. Das Heizelement 12 wurde bei diesem Versuch im Zeitpunkt t₁ ausgeschaltet, nachdem der Oxidationskatalysator 10 deutlich über seiner light-off-Temperatur von etwa 200 Grad Celsius erwärmt worden ist. Dann werden über den HC-Port 11 Kohlenwasserstoffe in den den Nebenstrang 4 durchströmenden Abgasstrom dosiert. Die katalytische Umsetzung der zugeführten Kohlenwasserstoffe wird durch den deutlichen Temperaturanstieg bei t₂ (etwa 120 Sekunden) in der Temperaturkurve "nach DOC I" deutlich. Hat der Oxidationskatalysator 7 seine light-off-Temperatur erreicht, wird im Zeitpunkt t₃ die HC-Dosierung erhöht, um auch diesem Oxidationskatalysator 7 Kohlenwasserstoffe zum Auslösen der gewünschten Konvertierung zugeführt werden. Diese über den HC-Port 11 zugeführten Kohlenwasserstoffe werden an dem Oxidationskatalysator 10 nicht konvertiert und beaufschlagen den Oxidationskatalysator 7 in Gasphase. Die Beaufschlagung des Oxidationskatalysators 7 mit Kohlenwasserstoffen macht sich durch den raschen Anstieg der Temperatur-kurve "nach DOC II" kurz nach dem Zeitpunkt t₃ bemerkbar.

Reicht der durch die aus dem Vorsteuerkennfeld abgegriffene Vorsteuergröße zum Ansteuern der Aktoren der Abgasreinigungsanlage 1 bewirkte Temperaturhub ausgangsseitig bezüglich des Oxidationskatalysators 7 (Kurve "nach DOC II") zum Erreichen der SOLL-Temperatur von etwa 600 Grad Celsius noch nicht aus, so werden die Einstellungen der Aktoren der Abgasreinigungsanlage geändert, was sich in einem weiteren Anstieg der Temperaturkurve "nach DOC II" bemerkbar macht.

Ein Vergleich der in Figur 2 im unteren Diagramm aufgezeigten Kurven der Temperatur "nach DOC I" und "vor DOC II" verdeutlicht die durch das Mischen des aus dem Nebenstrang 4 geleiteten Abgasteilstromes mit dem durch den Hauptstrang 3 geleiteten bewirkte Vergleichmäßigung der Temperatur des den zweiten Oxidationskatalysator 7 anströmenden Abgases. Deutlich wird zudem der durch einen Betrieb des Oxidationskatalysators 7 (DOC II) bewirkte Temperaturhub, was durch die Kurve "nach DOC II" kenntlich gemacht ist. Somit kann durch dieses Verfahren unabhängig von der Durchführung oder Nichtdurchführung eines Regenerationsprozesses die Temperatur des zweiten Oxidationskatalysators und des Partikelfilters 2 überwacht werden, und zwar dahingehend, dass rasche Temperaturwechsel vermieden sind. Damit wird die Lebensdauer des Oxidationskatalysators und des Partikelfilters, insbesondere wenn diese aus einem keramischen Substrat gefertigt sind, nicht unbeträchtlich erhöht.

Zur Orientierung ist in diesem Temperaturdiagramm die light-off-Temperatur des Oxidationskatalysators 10 mit T₁, diejenige des Oxidationskatalysators 7 mit T₂ eingetragen. T₃ ist diejenige Temperatur, ab der eine Rußoxidation stattfindet.

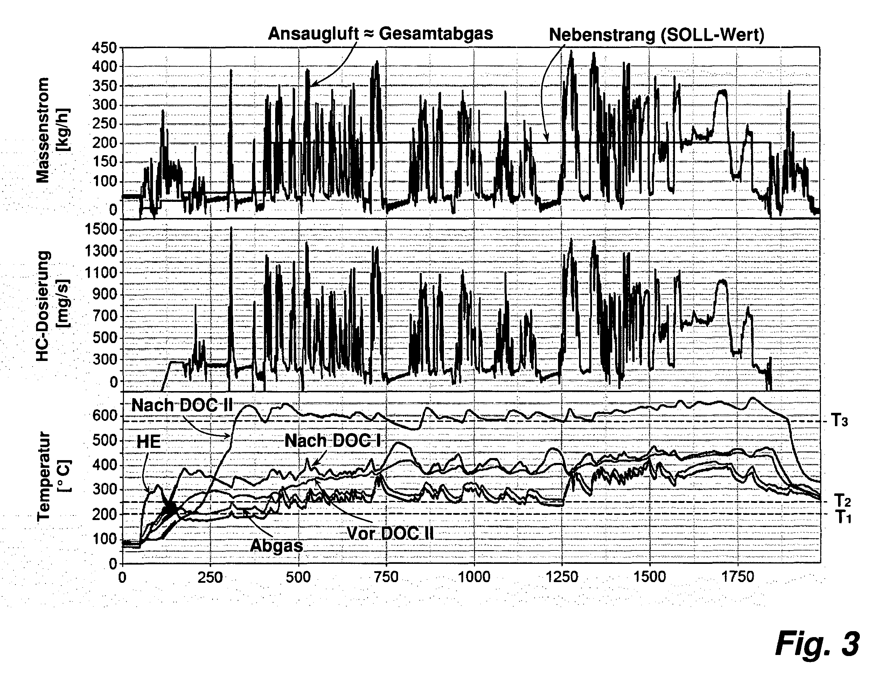

Figur 3 zeigt eine weitere Versuchsdurchführung, die prinzipiell derjenigen der Figur 2 entspricht. Der Versuchsaufbau der Figur 3 unterscheidet sich von demjenigen der Figur 2 dadurch, dass ein anderer Zyklus gefahren worden ist. Der Zyklus gemäß Figur 3 ist in Anlehnung an den World-Harmonized-Transient-Cycle (WHTC) gefahren worden.

Die beiden Versuchsdurchführungen zeigen anschaulich, dass trotz großer Schwankungen im dynamischen Betrieb des Dieselmotors ausgangsseitig bezüglich des zweiten Oxidationskatalysators 7 (Kurve "nach DOC II") eine Abgastemperatur festgestellt werden kann, die nur geringen Schwankungen unterliegt. Dieses macht deutlich, dass mit dem vorbeschriebenen Verfahren nicht nur mit kurzer Reaktionszeit auf dynamische Schwankungen reagiert werden kann, sondern dass selbst bei derartigen Schwankungen und bei sehr niedrigen Abgastemperaturen ein Regenerationsprozess des Partikelfilters 2 bestimmungsgemäß ablaufen kann.

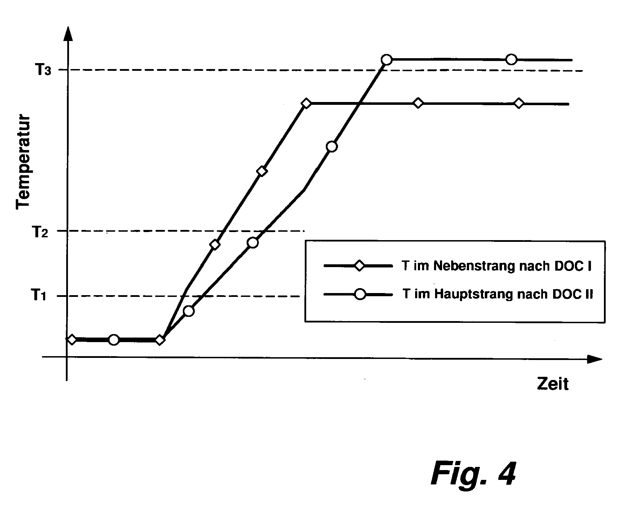

Schematisiert ist das Erwärmen des Abgasstromes zum Herbeiführen einer Rußoxidation am Partikelfilter 2 zu seiner Regeneration in Figur 4 als Zusammenfassung der Ergebnisse aus den Untersuchungen gemäß Figuren 2 und 3 dargestellt. Die Temperaturangaben T₁, T₂, T₃ entsprechen denjenigen aus den Figuren 2 und 3. Figur 4 macht deutlich, dass aufgrund des Einsatzes des Heizelementes 12, der geringeren Baugröße und der höheren Edelmetallbeladung des im Nebenstrang 4 angeordneten Oxidationskatalysators 10 (DOC I) dieser rascher erwärmt wird als der im Hauptstrang 3 angeordnete Oxidationskatalysator 7 (DOC II).

Das vorbeschriebene Ansteuerungs- und Regelverfahren wird überlagert durch eine Kontrolle bzw. Beobachtung der Temperatur des in den Nebenstrang 4 eingeschalteten Oxidationskatalysators 10, damit dieser nicht über seine zugelassene Maximaltemperatur erwärmt wird. Droht dieser zu warm zu werden, wird entweder die HC-Dosierung reduziert und/oder der durch den Nebenstrang 4 geleitete Abgasmassenstrom erhöht.

Das in dem Nebenstrang 4 eingeschaltete Heizelement 12 kann genutzt werden, um die Funktionstüchtigkeit der Abgasklappe 8 zu überprüfen. Dieses erfolgt bei einer über die Messdauer möglichst gleich bleibenden Betriebsbedingung des Dieselmotors. Unter Zugrundelegung der von dem Dieselmotor ausgestoßenen Abgasmasse wird bei Zuführen einer definierten Energiemenge zum Erwärmen des Heizelementes 12 ein bestimmter Temperaturhub erwartet. Weicht der festgestellte Temperaturhub signifikant von dem erwarteten ab, ist dieses ein Hinweis darauf, dass sich die Abgasklappe 8 nicht in der richtigen Position befindet, mithin nicht der erforderliche Abgasstrom über den Nebenstrang 4 geleitet wird.

Bei der beschriebenen Abgasreinigungsanlage wird an dem im Hauptstrang befindlichen Oxidationskatalysator 7 auch CO oxidiert und damit der CO-Ausstoß verringert. Daher versteht es sich, dass als Abgasreinigungsaggregat, dessen Betriebstemperatur überwacht werden soll, auch alleinig ein Oxidationskatalysator ohne einen diesem nachgeschalteten Partikelfilter verwendet werden kann.

Um den in den Nebenstrang eingeschalteten Oxidationskatalysator auf seine Betriebstemperatur zu bringen, ist es, wenn das von der Brennkraftmaschine ausgestoßene Abgas eine hinreichende Temperatur aufweist, möglich, den Abgasstrom ganz oder teilweise durch den Nebenstrang für eine gewisse Zeit zu leiten. Dieses dient dem Zweck, den im Nebenstrang angeordneten Oxidationskatalysator, so weit wie durch die Temperatur des Abgases möglich, vorzuerwärmen, um diesen auf seine Betriebstemperatur zu bringen. Bei dieser Maßnahme kann der gesamte Abgasstrom durch den Nebenstrang geleitet werden. Typischerweise wird man eine solche Maßnahme im Vorfeld einer vorgesehenen Regeneration des Partikelfilters vornehmen. Es versteht sich, dass ergänzend auch das in den Nebenstrang eingeschaltete Heizelement für die Zwecke der Vorerwärmung des Oxidationskatalysators genutzt werden kann.

Das vorbeschriebene Verfahren kann zudem Diagnosefunktionen beinhalten, die einzeln oder kombiniert miteinander zur Anwendung gelangen können. In diesem Zusammenhang kann beispielsweise eine Vorabprüfung vor Durchführen des Verfahrens erfolgen, und zwar dahingehend, ob das Verfahren überhaupt in Betrieb genommen werden kann. Dieses umfasst eine Funktionalitätsprüfung der an der Durchführung des Verfahrens beteiligten Komponenten auf das Vorliegen möglicher Fehler. Dieses umfasst typischerweise auch die Erfassung der Temperatur an dem in dem Nebenstrang enthaltenen Oxidationskatalysator. Wird etwa festgestellt, dass dessen Temperatur noch unterhalb seiner light-off-Temperatur liegt, kann eine Fehlermeldung generiert werden und/oder eine Einspritzung von Kohlenwasserstoffen solange verzögert werden, bis dieser Katalysator seine light-off-Temperatur erreicht hat. Gleiches gilt entsprechend für den Betrieb des zweiten Oxidationskatalysators, und zwar dahingehend, dass ein Überspritzen des ersten Oxidationskatalysators erst dann gestattet ist, wenn der zweite Katalysator eine Temperatur erreicht hat, die gleich oder oberhalb seiner light-off-Temperatur liegt.

Weitere Diagnosefunktionalitäten können in Bezug auf die Konvertierungsraten der beiden Oxidationskatalysatoren erfolgen. Eine Funktionalitätsüberprüfung der Oxidationskatalysatoren kann etwa durch Einbringen einer vordefinierten Kohlenwasserstoffmenge in den den Oxidationskatalysator anströmenden Abgasmassenstrom und dem sich daraus bei Bekanntsein des Abgasmassenstroms errechnenden Temperatur-Hub in einem Vergleich mit dem tatsächlich bewirkten Temperaturhub erfolgen. Auf diese Weise können unerwartete Alterungserscheinungen an den Oxidationskatalysatoren erkannt werden. Eine system- und materialbedingte Alterung der Oxidationskatalysatoren wird hingegen bei der Diagnose berücksichtigt.

Noch eine weitere Diagnosefunktionalität kann zur Prüfung des Stellgliedes, mit dem der den Nebenstrang durchströmende Abgasstrom geregelt wird, vorgenommen werden. Neben der bereits weiter oben beschriebenen Methode kann dieses Stellglied auch ohne Notwendigkeit, Kohlenwasserstoffe dem Abgasmassenstrom beizumengen, durchgeführt werden. Dieses gelingt unter Ausnutzung des Umstandes, dass der Hauptstrang und der Nebenstrang unterschiedlich Wärmeverluste aufweisen. Da diese Größen bekannt sind, kann durch Vergleich der Abgastemperaturen, gemessen an dem Temperatursensor 13 und dem Temperatursensor 13.2 und dem dadurch ermittelten Wärmeverlust bei einer vorgegebenen Stellung des Steuergliedes, beispielsweise der Abgasklappe 8 deren Funktionalität überprüft werden. Bei geschlossener Abgasklappe strömt der gesamte Abgasmassenstrom durch den Nebenstrang, so dass sodann an dem Temperatursensor 13.2 bei vorbekanntem Abgasmassenstrom eine Temperatur zu messen wäre, die derjenigen, gemessen an dem Temperatursensor 13 abzüglich des Wärmeverlustes des Nebenstranges entspricht. Gleiches gilt in der anderen Endstellung der Abgasklappe, namentlich wenn diese geöffnet ist und der gesamte Abgasmassenstrom durch den Hauptstrang strömt.

Das thermische Energiezuführungsverfahren wird zweckmäßigerweise derart durchgeführt, dass ein HC-Schlupf möglichst klein gehalten, wenn nicht gar vermieden wird. Die vorbeschriebenen Diagnoseverfahren helfen, dieses Ziel zu erreichen. Zusätzlich bietet es sich an, bei einem nötig werdenden Anstieg der zuzuführenden HC-Menge diesen Anstieg rampenförmig auszugestalten und nicht sprunghaft die HC-Dosiermenge zu erhöhen.

Beschrieben ist die Erfindung anhand eines Ausführungsbeispiels, bei dem die light-off-Temperatur des Oxidationskatalysators im Nebenstrang durch eine höhere Edelmetallbeladung geringer ist als diejenige des im Hauptstrang angeordneten und dem vorgenannten Oxidationskatalysator nachgeschalteten Oxidationskatalysators. Dieses ist grundsätzlich nicht erforderlich. Vielmehr kann auch der im Nebenstrang angeordnete Oxidationskatalysator eine dem im Hauptstrang angeordneten entsprechende light-off-Temperatur oder auch eine andere light-off-Temperatur aufweisen, wenn der im Nebenstrang angeordnete Oxidationskatalysator durch andere Mittel, beispielsweise durch eine entsprechend ausgelegte Heizeinrichtung rascher auf seine light-off-Temperatur gebracht werden kann als der andere, diesem nachgeschaltete Oxidationskatalysator.

Die Beschreibung der Erfindung macht deutlich, dass mit dem beschriebenen Verfahren nicht nur ein in den Abgasstrang einer Brennkraftmaschine eingeschaltetes Abgasreinigungsaggregat, beispielsweise ein Partikelfilter auf eine SOLL-Temperatur gebracht werden kann, sondern dass über dieses Verfahren auch eine Vergleichmäßigung in der Temperaturführung des Abgasreinigungsaggregates erreicht werden kann.

Die Beschreibung der Erfindung ist anhand von Ausführungsbeispielen erläutert worden. Ohne den Umfang der geltenden Ansprüche zu verlassen, ergeben sich für einen Fachmann weitere Ausgestaltungen, die Erfindung verwirklichen zu können, ohne dass dieses im Einzelnen dargelegt werden müsste. Gleichwohl zählen auch diese Ausgestaltungen zum Offenbarungsgehalt dieser Ausführungen.

### Bezugszeichenliste

- 1: Abgasreinigungsanlage
- 2: Partikelfilter
- 3: Hauptstrang
- 4: Nebenstrang
- 5: Position
- 6: Position
- 7: Oxidationskatalysator
- 8: Abgasklappe
- 9: katalytischer Brenner
- 10: Oxidationskatalysator
- 11: HC-Port
- 12: Heizelement
- 13, 13.1, 13.2, 13.3: Temperatursensor
- 14: Lamda-Sonde

## Patentansprüche

1. Verfahren zum Zuführen von thermischer Energie in ein in den Abgasstrang einer Brennkraftmaschine, insbesondere eines Dieselmotors, eingeschaltetes Abgasreinigungsaggregat (2) durch Erwärmen des das Abgasreinigungsaggregat (2) anströmenden Abgases auf eine SOLL-Temperatur, bei welchem Verfahren das von der Brennkraftmaschine ausgestoßene Abgas durch Konvertierung von in den Abgasstrom dosierten Kohlenwasserstoffen (HC) an zwei in Strömungsrichtung des Abgases hintereinander geschalteten Oxidationskatalysatoren (7, 10) auf die SOLL-Temperatur erwärmt wird, von denen der in Strömungsrichtung des Abgases der Brennkraftmaschine nähere, erste Oxidationskatalysator (10) in einem Nebenstrang (4) und der diesem nachgeschaltete, zweite Oxidationskatalysator (7) im Abgasstrang nach der Vereinigung von Haupt- und Nebenstrang (3, 4) angeordnet sind, wobei
- in Abhängigkeit von der IST-Temperatur und der SOLL-Temperatur des das Abgasreinigungsaggregat (2) anströmenden Abgases die HC-Dosierung zum Zuführen von Kohlenwasserstoffen in den Nebenstrang (4) stromauf des ersten Oxidationskatalysators (10) und/oder der den Nebenstrang (4) durchströmende Abgasmassenstrom eingestellt wird,
**dadurch gekennzeichnet, dass**
- die HC-Dosierung zum Zuführen von Kohlenwasserstoffen in den Nebenstrang (4) und/oder der den Nebenstrang (4) durchströmte Abgasmassenstrom zusätzlich in Abhängigkeit von der Masse des von der Brennkraftmaschine ausgestoßenen Gesamtabgasstromes eingestellt werden,
- wobei die Einstellung der HC-Dosierung und/oder des den Nebenstrang durchströmenden Abgasmassenstroms mittels einer aus einem den Abgasstrom und den zu erzielenden Temperaturhub berücksichtigenden Vorsteuerkennfeld den aktuellen Bedingungen entsprechenden Vorsteuergröße oder, sollte eine solche Vorsteuergröße im Vorsteuerkennfeld nicht hinterlegt sein, diejenige, die dieser nahe kommt, erfolgt,
- wiederholt die IST-Temperatur des das Abgasreinigungsaggregat (2) anströmenden Abgases erfasst wird und
- bei Feststellen einer Differenz zwischen der IST-Temperatur und der SOLL-Temperatur die Einstellung der HC-Dosierung und/oder des den Nebenstrang (4) durchströmenden Abgasmassenstroms zum Erreichen der SOLL-Temperatur geändert wird, wobei die Schritte des Temperatur-Monitoring so oft wiederholt werden, bis die SOLL-Temperatur erreicht ist.

2. Verfahren nach Anspruch 1, **dadurch gekennzeichnet, dass** die wiederholten Schritte des Temperatur-Monitorings kontinuierlich wiederholt werden, bis ein bestimmter Prozess des Abgasreinigungsaggregates (2) abgeschlossen ist oder dieser beendet werden soll.

3. Verfahren nach Anspruch 1 oder 2, **dadurch gekennzeichnet, dass** der den ersten Oxidationskatalysator (10) anströmende Abgasstrom elektrothermisch auf eine Temperatur vorerwärmt wird, bevor dieser den Oxidationskatalysator (10) anströmt, welche Temperatur gleich oder höher ist als die light-off-Temperatur des Oxidationskatalysators (10).

4. Verfahren nach einem der Ansprüche 1 bis 3, **dadurch gekennzeichnet, dass** vor einer Inbetriebnahme und/oder nach Abschluss einer Betriebsphase des ersten Oxidationskatalysators (10) der von der Brennkraftmaschine ausgestoßene Abgasstrom zumindest anteilig durch den Nebenstrang (4) geleitet wird.

5. Verfahren nach einem der Ansprüche 1 bis 4, **dadurch gekennzeichnet, dass** der von der Brennkraftmaschine ausgestoßene Abgasmassenstrom insgesamt durch den Nebenstrang geleitet wird, dass dieser innerhalb des Nebenstranges mit einer definierten Energiemenge erwärmt, anschließend der durch die Erwärmung erzielte Temperaturhub gemessen wird und anschließend in Abhängigkeit von der eingesetzten Energiemenge und dem erzielten Temperaturhub der von der Brennkraftmaschine ausgestoßene Abgasmassenstrom ermittelt wird.

6. Verfahren nach Anspruch 1 bis 4, **dadurch gekennzeichnet, dass** der von der Brennkraftmaschine ausgestoßene Abgasmassenstrom in einem Teilabgasstrom durch den Nebenstrang geleitet wird, dass dieser innerhalb des Nebenstranges mit einer definierten Energiemenge erwärmt, anschließend der durch die Erwärmung erzielte Temperatur-hub gemessen wird und anschließend in Abhängigkeit von der eingesetzten Energiemenge und dem erzielten Temperaturhub der Teilabgasmassenstrom und somit auch der von der Brennkraftmaschine ausgestoßene Abgasmassenstrom ermittelt wird.

7. Verfahren nach Anspruch 5 oder 6, **dadurch gekennzeichnet, dass** der durch den Nebenstrang geleitete Abgasmassenstrom elektrothermisch erwärmt wird.

8. Verfahren nach einem der Ansprüche 1 bis 7, **dadurch gekennzeichnet, dass** die Einstellungen von HC-Dosierung und ggf. der den Nebenstrang (4) durchströmenden Abgasmasse geändert wird, wenn der zweite Oxidationskatalysator (7) seine light-off-Temperatur erreicht hat und zwar dahingehend, dass die HC-Dosierung zum Zwecke der Zuführung von Kohlenwasserstoffen an dem zweiten Oxidationskatalysator (7) erhöht wird.

9. Verfahren nach Anspruch 8, **dadurch gekennzeichnet, dass** die light-off-Temperatur des ersten Oxidationskatalysators (10) niedriger ist als diejenige des zweiten Oxidationskatalysators (7).

10. Verfahren nach Anspruch 8 oder 9, **dadurch gekennzeichnet, dass** die Einstellungen von HC-Dosierung und den Nebenstrang (4) durchströmendem Abgasmassenstrom eingestellt werden, damit die dem zweiten Oxidationskatalysator (7) zuzuführenden Kohlenwasserstoffe diesen in Gasphase erreichen.

11. Verfahren nach einem der Ansprüche 1 bis 10, **dadurch gekennzeichnet, dass** die IST-Temperatur des ersten Oxidationskatalysators (10) auf ein Erreichen einer vorbestimmten Maximaltemperatur hin überwacht wird und dass bei Feststellen des Erreichens der Maximaltemperatur entweder der den Nebenstrang (4) durchströmende Abgasmassenstrom erhöht und/oder die HC-Dosierung reduziert wird.

12. Verfahren nach einem der Ansprüche 1 bis 11, **dadurch gekennzeichnet, dass** bei der Einstellung der HC-Dosierung und des den Nebenstrang (4) durchströmenden Abgasmassenstroms der im Abgas enthaltene Sauerstoff berücksichtigt wird.

13. Verfahren nach einem der Ansprüche 1 bis 12, **dadurch gekennzeichnet, dass** zur Steuerung des den Nebenstrang (4) durchströmenden Abgasmassenstroms die freie durchströmbare Querschnittsfläche in zumindest einem der beiden Stränge (3, 4), etwa durch eine darin angeordnete Abgasklappe (8), geändert wird.

14. Verfahren nach einem der Ansprüche 1 bis 13, **dadurch gekennzeichnet, dass** die Einstellung hinsichtlich der HC-Dosierung und des den Nebenstrang (4) durchströmenden Abgasmassenstroms, bei der die SOLL-Temperatur des das Abgasreinigungsaggregat (2) anströmenden Abgases erreicht worden ist, als neue Vorsteuergröße in Bezug auf die Ausgangs-IST-Temperatur und den Ausgangsabgasmassenstrom in dem Vorsteuerkennfeld abgelegt wird.

15. Verfahren nach einem der Ansprüche 1 bis 14, **dadurch gekennzeichnet, dass** das Verfahren zum Auslösen des Regenerationsprozesses eines Partikelfilters (2) und gegebenenfalls für die Dauer eines Regenerationsprozesses durchgeführt wird.

## Claims

1. Method for feeding thermal energy into an exhaust emission control unit (2) connected in the exhaust gas system of an internal combustion engine, in particular of a diesel engine, by heating the exhaust gas flowing to the exhaust emission control unit (2) to a SET temperature, with which method the exhaust gas discharged from the internal combustion engine is heated to the SET temperature by converting hydrocarbons (HC) metered into the exhaust gas flow at two oxidation catalytic converters (7,10) series-connected in the flow direction of the exhaust gas, of which the first oxidation catalytic converter (10) closer in the flow direction of the exhaust gas of the internal combustion engine is arranged in a branch line (4) and the second oxidation catalytic converter (7) downstream of this is arranged in the exhaust gas line after the conjoining of the main and branch lines (3, 4), wherein
- as a function of the ACTUAL temperature and the SET temperature of the exhaust gas flowing to the exhaust gas emission control unit (2), the HC metering for the introduction of hydrocarbons into the branch line (4) is adjusted upstream of the first oxidation catalytic converter (10) and/or the exhaust gas flow flowing through the branch line (4) is adjusted,
**characterised in that**
- the HC metering for the introduction of hydrocarbons into the branch line (4) and/or the exhaust gas flow flowing through the branch line (4) is additionally adjusted as a function of the mass of the total exhaust gas flow discharged from the internal combustion engine,
- wherein the setting of the HC metering and/or of the exhaust gas flow flowing through the branch line takes place by means of a pilot control value from a pilot control characteristic map, taking account of the exhaust gas flow and the temperature rise which is to be achieved, according to the present conditions, or, if such a pilot control value is not deposited in the pilot control characteristic map, it takes place by means of that value which comes close to this,
- the ACTUAL temperature of the exhaust gas flowing to the exhaust emission control unit (2) is again determined, and
- in the event of a difference being detected between the ACTUAL temperature and the SET temperature, the setting of the HC metering and/or of the exhaust gas flow flowing through the branch line (4) is changed in order to reach the SET temperature, wherein the steps of temperature monitoring are repeated as often as required until the SET temperature is reached.

2. Method according to claim 1, **characterised in that** the repeated steps of the temperature monitoring are continually repeated until a specific process of the exhaust emission control unit (2) is completed or it is intended that this should be terminated.

3. Method according to claim 1 or 2, **characterised in that** the exhaust gas flow flowing to the first oxidation catalytic converter (10) is preheated electrothermally, before it flows to the oxidation catalytic converter (10), to a temperature which is equal to or greater than the light-off temperature of the oxidation catalytic converter (10).

4. Method according to any one of claims 1 to 3, **characterised in that,** before the taking into operation and/or after the conclusion of an operating phase of the first oxidation catalytic converter (10), the exhaust gas flow discharged from the internal combustion engine is at least proportionally conducted through the branch line (4).

5. Method according to any one of claims 1 to 3, **characterised in that** the exhaust gas flow discharged from the internal combustion engine is conducted entirely through the branch line, this is heated inside the branch line with a defined quantity of energy, the temperature rise achieved by this heating is then measured, and then, as a function of the quantity of energy used and the temperature rise achieved, the exhaust gas flow discharged from the internal combustion engine is determined.

6. Method according to any one of claims 1 to 4, **characterised in that** the exhaust gas flow discharged from the internal combustion engine is conducted in a part exhaust gas flow through the branch line, that this is heated inside the branch line with a defined quantity of energy, the temperature rise achieved by the heating is then measured, and then, as a function of the quantity of energy used and the temperature rise achieved, the part exhaust gas flow is determined, and therefore also the exhaust gas flow discharged from the internal combustion engine.

7. Method according to claim 5 or 6, **characterised in that** the exhaust gas flow conducted through the branch line is heated electrothermally.

8. Method according to any one of claims 1 to 7, **characterised in that** the settings of HC metering and, as appropriate, of the exhaust gas flow flowing through the branch line (4) are changed if the second oxidation catalytic converter (7) has reached its light-off temperature, and specifically **in that** the HC metering is increased for the purpose of conducting hydrocarbons to the second oxidation catalytic converter (7).

9. Method according to claim 8, **characterised in that** the light-off temperature of the first oxidation catalytic converter (10) is lower than that of the second oxidation catalytic converter (7).

10. Method according to claim 8 or 9, **characterised in that** the settings of HC metering and of the exhaust gas flow flowing through the branch line (4) are adjusted such that the hydrocarbons flowing to the second oxidation catalytic converter (7) reach it in the gas phase.

11. Method according to any one of claims 1 to 10, **characterised in that** the ACTUAL temperature of the first oxidation catalytic converter (10) is monitored for the attaining of a predetermined maximum temperature, and that, on the attaining of the maximum temperature being determined, either the exhaust gas flow flowing through the branch line (4) and/or the HC metering is reduced.

12. Method according to any one of claims 1 to 11, **characterised in that,** at the setting of the HC metering and of the exhaust gas flow flowing through the branch line (4), account is taken of the oxygen contained in the exhaust gas.

13. Method according to any one of claims 1 to 12, **characterised in that,** for the control of the exhaust gas flow flowing through the branch line (4), the cross-section area which can be freely flowed through is changed in at least one of the two branches (3, 4), for example by means of an exhaust gas damper (8) arranged there.

14. Method according to any one of claims 1 to 13, **characterised in that** the setting in respect of the HC metering and of the exhaust gas flow flowing through the branch line (4), at which the SET temperature of the exhaust gas flowing to the exhaust emission control unit (2) has been attained, is deposited as the new pilot control value in the pilot control characteristic map in respect of the discharge ACTUAL temperature and the discharge exhaust gas flow.

15. Method according to any one of claims 1 to 14, **characterised in that** the method is carried out for triggering the regeneration process of a particle filter (2) and, as appropriate, for the duration of a regeneration process.

## Revendications

1. Procédé pour fournir de l'énergie thermique à un dispositif de purification de gaz d'échappement (2) placé dans le circuit d'échappement d'un moteur à combustion interne, notamment d'un moteur diesel, en réchauffant le gaz d'échappement qui arrive au dispositif de purification de gaz d'échappement (2) à une température DE CONSIGNE, au cours duquel procédé le gaz d'échappement émis par le moteur à combustion interne est chauffé à la température DE CONSIGNE par conversion des hydrocarbures (HC) dosés dans le flux de gaz d'échappement au contact de deux catalyseurs d'oxydation (7, 10) montés l'un derrière l'autre dans le sens de circulation du gaz d'échappement, dont le premier catalyseur d'oxydation (10), le plus proche du moteur à combustion interne, considéré dans le sens de circulation du gaz d'échappement, est placé sur un circuit annexe (4) et dont le second catalyseur d'oxydation (7), monté en aval du précédent, est placé sur un circuit après réunification des circuits principal et annexe (3, 4), pour lequel
- le dosage de HC pour acheminer les hydrocarbures vers le circuit annexe (4) et/ou le flux d'ensemble de gaz d'échappement traversant le circuit annexe (4) étant réglé à l'amont du premier catalyseur d'oxydation (10) en fonction de la température EFFECTIVE et de la température DE CONSIGNE du gaz d'échappement arrivant au dispositif de purification de gaz d'échappement (2),
**caractérisé en ce que**
- le dosage de HC afin d'acheminer des hydrocarbures dans le circuit annexe (4) et/ou le flux d'ensemble de gaz d'échappement circulant dans le circuit annexe (4) sont de surcroît ajustés en fonction de la quantité de flux d'ensemble de gaz d'échappement émis par le moteur à combustion interne,
- le réglage du dosage de HC et/ou le flux d'ensemble de gaz d'échappement circulant dans le circuit annexe étant réalisé au moyen d'une grandeur de commande pilote correspondant aux conditions actuelles du réseau de caractéristiques pilotes, lequel tient compte du flux de gaz d'échappement et de la montée en température à réaliser, ou alors, si une telle grandeur de commande pilote ne devait pas être mémorisée dans le réseau de caractéristiques pilotes, de celle qui s'en rapproche le plus,
- la température EFFETIVE du gaz d'échappement arrivant sur le dispositif d'épuration de gaz d'échappement (2) est détectée de façon répétée et
- si une différence entre la température EFFECTIVE et la température DE CONSIGNE est constatée, le réglage du dosage de HC et/ou du flux d'ensemble de gaz d'échappement circulant dans le circuit annexe (4) est modifié dans le but d'atteindre la température DE CONSIGNE, les étapes de monitoring de la température se répétant jusqu'à l'atteinte de la température DE CONSIGNE.

2. Procédé selon la revendication 1, **caractérisé en ce que** les étapes répétées de monitoring de la température sont continuellement répétées jusqu'à ce qu'un processus précis du dispositif de purification de gaz d'échappement (2) soit terminé ou jusqu'à ce que l'on doive y mettre fin.

3. Procédé selon la revendication 1 ou 2, **caractérisé en ce que** le flux de gaz d'échappement circulant vers le premier catalyseur d'oxydation (10) est préchauffé de façon électrothermique avant d'arriver au catalyseur d'oxydation (10), à une température identique ou supérieure à la température de light-off du catalyseur d'oxydation (10).

4. Procédé selon l'une des revendications 1 à 3, **caractérisé en ce que,** avant une mise en service et/ou à l'issue d'une phase d'exploitation du premier catalyseur d'oxydation (10), le flux de gaz d'échappement émis par le moteur à combustion interne est dirigé au moins partiellement à travers le circuit annexe (4).

5. Procédé selon l'une des revendications 1 à 4, **caractérisé en ce que** le flux d'ensemble de gaz d'échappement émis par le moteur à combustion interne est totalement dirigé à travers le circuit annexe, qu'il est réchauffé à l'intérieur du circuit annexe grâce à une quantité d'énergie définie, que la montée de température obtenue grâce au réchauffement est ensuite mesurée et que le flux d'ensemble de gaz d'échappement émis par le moteur à combustion interne est ensuite déterminé en fonction de la quantité d'énergie utilisée et de la montée en température atteinte.

6. Procédé selon la revendication 1 à 4, **caractérisé en ce que** le flux d'ensemble de gaz d'échappement émis par le moteur à combustion interne est dirigé sous forme de flux partiel de gaz d'échappement à travers le circuit annexe, qu'il est réchauffé à l'intérieur du circuit annexe grâce à une quantité d'énergie définie, que la montée de température obtenue grâce au réchauffement est ensuite mesurée et que le flux partiel de gaz d'échappement et par conséquent également le flux d'ensemble de gaz d'échappement émis par le moteur à combustion interne sont ensuite déterminés en fonction de la quantité d'énergie utilisée et de la montée en température atteinte.

7. Procédé selon la revendication 5 ou 6, **caractérisé en ce que** le flux d'ensemble de gaz d'échappement dirigé à travers le circuit annexe est réchauffé de façon électrothermique.

8. Procédé selon l'une des revendications 1 à 7, **caractérisé en ce que** les réglages du dosage de HC et éventuellement de l'ensemble de gaz d'échappement circulant dans le circuit annexe (4) sont modifiés quand le second catalyseur d'oxydation (7) a atteint sa température de light-off et ce, de façon à augmenter le dosage de HC destiné à fournir des hydrocarbures au second catalyseur d'oxydation (7).

9. Procédé selon la revendication 8, **caractérisé en ce que** la température de light-off du premier catalyseur d'oxydation (10) est plus basse que celle du second catalyseur d'oxydation (7).

10. Procédé selon la revendication 8 ou 9, **caractérisé en ce que** les réglages du dosage de HC et du flux d'ensemble de gaz d'échappement circulant dans le circuit annexe (4) ont été réalisés de telle sorte que les hydrocarbures à acheminer vers le second catalyseur d'oxydation (7) parviennent à ce dernier en phase gazeuse.

11. Procédé selon l'une des revendications 1 à 10, **caractérisé en ce que** la température EFFECTIVE du premier catalyseur d'oxydation (10) est surveillée pour contrôler l'atteinte d'une température maximale prédéfinie et qu'à la constatation de l'atteinte de la température maximale, soit le flux d'ensemble de gaz d'échappement circulant dans le circuit annexe (4) est augmenté, et/soit le dosage de HC est réduit.

12. Procédé selon l'une des revendications 1 à 11, **caractérisé en ce que** l'on tient compte de l'oxygène contenu dans le gaz d'échappement lors du réglage du dosage de HC et du flux d'ensemble de gaz d'échappement circulant dans le circuit annexe (4).

13. Procédé selon l'une des revendications 1 à 12, **caractérisé en ce que** pour commander le flux d'ensemble de gaz d'échappement circulant dans le circuit annexe (4), on modifie la surface de la section de libre circulation dans l'un au moins des deux circuits (3, 4), par exemple en y plaçant un clapet d'étranglement (8) des gaz.

14. Procédé selon l'une des revendications 1 à 13, **caractérisé en ce que** le réglage concernant le dosage de HC et le flux d'ensemble de gaz d'échappement circulant dans le circuit annexe (4), auquel le gaz d'échappement arrivant au dispositif de purification de gaz d'échappement (2) a atteint la température DE CONSIGNE, est mémorisé dans le réseau de caractéristiques pilotes en tant que nouvelle grandeur pilote fondée sur la température EFFECTIVE de sortie et sur le flux d'ensemble de gaz d'échappement à la sortie.

15. Procédé selon l'une des revendications 1 à 14, **caractérisé en ce que** le procédé est réalisé pour déclencher le processus de régénération d'un filtre à particules (2) et éventuellement tant que dure le processus de régénération.
